# EUROPEAN PATENT APPLICATION

(11) **EP 4 429 211 A1**
(43) Date of publication of application: **11.09.2024**
(21) Application number: 22909896.7
(22) Date of filing: 17.12.2022
(51) Int. Cl.: H04L 69/06

(54) **CONTROL METHOD, PARAMETER READING METHOD, RELATED DEVICE AND INDUSTRIAL NETWORK**

(30) Priority: 23.12.2021 CN 202111592493
(71) Applicant: Huawei Technologies Co., Ltd., Shenzhen, Guangdong 518129 (CN)
(72) Inventor: LIN, Yi, Shenzhen, Guangdong 518129 (CN); LU, Qingcong, Shenzhen, Guangdong 518129 (CN)
(74) Representative: Thun, Clemens
(86) International application number: PCT/CN2022/139809
(87) International publication number: WO 2023/116583

(57) **Abstract**

Embodiments of this application disclose a control method, a parameter reading method, a related device, and an industrial network. In the method, a control frame carrying a control command is used, and the control frame carries a small quantity of overhead fields, to increase a transmission speed of the control command. The method in embodiments of this application includes: A first network terminal first receives a first control frame from a control device, where the first control frame carries N control commands, the N control commands are used to control N control objects of at least one industrial device, locations of the N control commands in the first control frame and information about the N control objects meet a first correspondence, and N is a positive integer; then determines, based on the locations of the N control commands in the first control frame and the first correspondence, the information about the control objects respectively corresponding to the N control commands; and finally controls the N control objects based on the N control commands and the information about the control objects corresponding to the N control commands.

## Description

This application claims priority to Chinese Patent Application No. 202111592493.9, filed with the China National Intellectual Property Administration on December 23, 2021 and entitled "CONTROL METHOD, PARAMETER READING METHOD, RELATED DEVICE, AND INDUSTRIAL NETWORK", which is incorporated herein by reference in its entirety.

### TECHNICAL FIELD

This application relates to the field of communication technologies, and in particular, to a control method, a parameter reading method, a related device, and an industrial network.

### BACKGROUND

With development of communication technologies, a control requirement on industrial devices is increasingly high. The industrial devices may be classified into two types. One type is an industrial device that needs to be controlled in a real-time manner, and the other type is an industrial device that does not need to be controlled in a real-time manner.

Regardless of the industrial device that needs to be controlled in a real-time manner or the industrial device that does not need to be controlled in a real-time manner, an existing mainstream control method is implemented by using an Ethernet packet. Specifically, the Ethernet packet includes two parts: a packet header and a control command. The control command part may include content such as an identifier of a read/write command, an identifier of a network terminal configured to receive the control command and control the industrial device based on the control command, register address information of the industrial device, a data length, and the control command.

It can be learned that the Ethernet packet carries a large quantity of overhead fields, affecting a transmission speed of the control command, and consequently affecting real-time control on the industrial device.

### SUMMARY

Embodiments of this application provide a control method, a parameter reading method, a related device, and an industrial network. In the method, a control frame carrying a control command is used, and the control frame carries a small quantity of overhead fields. This can increase a transmission speed of the control command.

According to a first aspect, this application provides a control method. The method is applied to an industrial network, where the industrial network includes a control device and Y network terminals, each network terminal is configured to control at least one industrial device, the Y network terminals include a first network terminal, and Y is a positive integer. Based on the foregoing industrial network, the method includes: The first network terminal receives a first control frame from the control device, where the first control frame carries N control commands, the N control commands are used to control N control objects of the at least one industrial device, locations of the N control commands in the first control frame and information about the N control objects meet a first correspondence, and N is a positive integer. There are a plurality of types of the control object. For example, the control object may be a speed, a location, power, or the like of the industrial device. There may also be a plurality of types of the information about the control object. This is not specifically limited in this application. The first network terminal determines, based on the locations of the N control commands in the first control frame and the first correspondence, the information about the control objects respectively corresponding to the N control commands. The first network terminal controls the N control objects based on the N control commands and the information about the control objects respectively corresponding to the N control commands.

Because the locations that are of the N control commands carried in the first control frame and that are in the first control frame and the information about the N control objects meet a preset correspondence, the network terminal may determine, based on the preset correspondence, the information about the control object corresponding to each control command, and then control the corresponding control object. Therefore, the first control frame does not need to carry a field indicating the information about the control object corresponding to the control command. This can reduce overhead fields carried in a control frame, and increase a transmission speed of the control command, to implement real-time control on the industrial device.

In an implementation, the control command includes a parameter value used to control the control object. The information about the control object includes a register address that is of the control object and that is in the industrial device. Correspondingly, that the first network terminal controls the N control objects based on the N control commands and the information about the control objects respectively corresponding to the N control commands includes: The first network terminal respectively writes, based on register addresses of the control objects respectively corresponding to the N control commands, parameter values in the N control commands into registers of the control objects respectively corresponding to the N control commands, to enable the at least one industrial device to execute the N control commands. Therefore, when the first control frame does not carry a field of register address information, the control object is controlled. In addition, in this application, overhead fields carried in the first control frame are reduced, and the transmission speed of the control command is increased, to implement the real-time control on the industrial device.

In an implementation, the control command includes a parameter value used to control the control object. The information about the control object includes an identifier of the control object. Correspondingly, that the first network terminal controls the N control objects based on the N control commands and the information about the control objects respectively corresponding to the N control commands includes: The first network terminal determines, based on identifiers of the control objects respectively corresponding to the N control commands and a second correspondence, register addresses that are of the control objects respectively corresponding to the N control commands and that are in the at least one industrial device, where the second correspondence is a correspondence between the identifier of the control object and the register address that is of the control object and that is in the industrial device. The first network terminal respectively writes, based on the register addresses of the control objects respectively corresponding to the N control commands, parameter values in the N control commands into registers of the control objects respectively corresponding to the N control commands, to enable the at least one industrial device to execute the N control commands. Therefore, when the first control frame does not carry a field of register address information, the control object is controlled. In addition, in this application, overhead fields carried in the first control frame are reduced, and the transmission speed of the control command is increased, to implement the real-time control on the industrial device.

In an implementation, the first control frame further includes the identifier of the control object. The N control objects are determined based on the identifier of the control object. Based on this, the first control frame may carry, based on an actual requirement, only some control commands used to control control objects of an industrial device served by the first network terminal. Therefore, in this application, a quantity of redundant control commands carried in the first control frame can be reduced, additional overheads of the first control frame can be reduced, and a transmission speed of the first control frame can be increased. This implements the real-time control on the industrial device.

In an implementation, the first control frame further includes an identifier of the network terminal. Before that the first network terminal determines, based on the locations of the N control commands in the first control frame and the first correspondence, the information about the control objects respectively corresponding to the N control commands, the method further includes: The first network terminal determines that the identifier of the network terminal is an identifier of the first network terminal.

Because the first control frame includes the identifier of the network terminal, the first network terminal may determine, based on the identifier of the network terminal, that the first control frame is used to control the control object of the industrial device corresponding to the first network terminal. In this way, when the control device needs to control the control object of the industrial device corresponding to the first network terminal, the first control frame needs to carry only the control command used to control the control object of the industrial device corresponding to the first network terminal, and does not need to carry a control command used to control a control object of an industrial device corresponding to another network terminal. Therefore, in this application, the quantity of redundant control commands carried in the first control frame can be reduced, the additional overheads of the first control frame can be reduced, and the transmission speed of the first control frame can be increased. This implements the real-time control on the industrial device.

According to a second aspect, this application provides a control method. The method is applied to an industrial network, where the industrial network includes a control device and Y network terminals, each network terminal is configured to control at least one industrial device, the Y network terminals include a first network terminal, and Y is a positive integer. Based on the foregoing industrial network, the method includes: The control device constructs a first control frame, where the first control frame carries N control commands, the N control commands are used to control N control objects of the at least one industrial device, locations of the N control commands in the first control frame and information about the N control objects meet a first correspondence, and N is a positive integer. There are a plurality of types of the control object. For example, the control object may be a speed, a location, power, or the like of the industrial device. There may also be a plurality of types of the information about the control object. This is not specifically limited in this application. The control device broadcasts the first control frame to the Y network terminals, to enable at least one of the Y network terminals to control the N control objects based on the N control commands, the locations of the N control commands in the first control frame, and the first correspondence. There are a plurality of methods for broadcasting the first control frame. For example, the first control frame may be broadcast via an optical splitter.

Because the locations that are of the N control commands carried in the first control frame and that are in the first control frame and the information about the N control objects meet the first correspondence, the network terminal may determine, based on the first correspondence, the information about the control object corresponding to each control command, and then control the control object based on the information about the control object. Therefore, the first control frame does not need to carry a field indicating the information about the control object corresponding to the control command. This reduces overhead fields carried in a control frame, and increases a transmission speed of the control command, to implement real-time control on the industrial device.

In an implementation, the control command includes a parameter value used to control the control object. The information about the control object includes a register address that is of the control object and that is in the industrial device. In this case, the first network terminal respectively writes, based on register addresses of the control objects respectively corresponding to the N control commands, parameter values in the N control commands into registers of the control objects respectively corresponding to the N control commands. Therefore, when the first control frame does not carry a field of register address information, the control object is controlled. In addition, overhead fields carried in the first control frame are reduced, and the transmission speed of the control command is increased, to implement the real-time control on the industrial device.

In an implementation, the control command includes a parameter value used to control the control object. The information about the control object includes an identifier of the control object. The first network terminal determines, based on identifiers of the control objects respectively corresponding to the N control commands and a second correspondence, register addresses that are of the control objects respectively corresponding to the N control commands and that are in the at least one industrial device. Then, the first network terminal respectively writes, based on the register addresses of the control objects respectively corresponding to the N control commands, parameter values in the N control commands into registers of the control objects respectively corresponding to the N control commands. Therefore, when the first control frame does not carry a field of register address information, the control object is controlled. In addition, overhead fields carried in the first control frame are reduced, and the transmission speed of the control command is increased, to implement the real-time control on the industrial device.

In an implementation, the first control frame further includes the identifier of the control object, and the identifier of the control object is used to determine the N control objects. The first network terminal may determine the N control objects based on the identifier. Based on this, the first control frame may carry, based on an actual requirement, only some control commands used to control control objects of an industrial device served by the first network terminal, and does not need to carry all control commands of the control objects of the industrial device served by the network terminal. Therefore, in this application, a quantity of redundant control commands carried in the first control frame can be reduced, additional overheads of the first control frame can be reduced, and a transmission speed of the first control frame can be increased. This implements the real-time control on the industrial device.

In an implementation, the first control frame further includes an identifier of the network terminal, and the identifier of the network terminal indicates one network terminal in the Y network terminals. Therefore, the first network terminal may determine, based on the identifier of the network terminal, that the first control frame is used to control the control object of the industrial device corresponding to the first network terminal. In this way, when the control device needs to control the control object of the industrial device corresponding to the first network terminal, the first control frame needs to carry only the control command used to control the control object of the industrial device corresponding to the first network terminal, and does not need to carry a control command used to control a control object of an industrial device corresponding to another network terminal. Therefore, in this application, the quantity of redundant control commands carried in the first control frame can be reduced, the additional overheads of the first control frame can be reduced, and the transmission speed of the first control frame can be increased. This implements the real-time control on the industrial device.

In an implementation, a data length of the first control frame is the same as a data length of a second control frame, and an identifier that is of the network terminal and that is included in the second control frame is different from the identifier that is of the network terminal and that is included in the first control frame.

That the data length of the first control frame is the same as the data length of the second control frame may be specifically understood as that the data length of the first control frame is a fixed value. Therefore, the first control frame does not need to carry a field used to mark the data length. This reduces the overhead fields in the first control frame, and increases the transmission speed of the control command.

According to a third aspect, this application provides a parameter reading method. The method is applied to an industrial network, where the industrial network includes a control device and Y network terminals, each network terminal is configured to control at least one industrial device, the Y network terminals include a first network terminal, and Y is a positive integer. Based on the foregoing industrial network, the method includes: The first network terminal obtains N parameter values of N control objects of the at least one industrial device, where N is a positive integer. The first network terminal constructs, based on information about the control objects respectively corresponding to the N parameter values and a third correspondence, a second control frame carrying the N parameter values, where the third correspondence is a correspondence met between locations of the N parameter values in the second control frame and the information about the control objects corresponding to the N parameter values. The first network terminal sends the second control frame to the control device, to enable the control device to read the N parameters in the second control frame based on the third correspondence.

It should be noted that a process in which the first network terminal reads the parameter of the control object of the industrial device may be considered as an inverse process of a process in which the first network terminal controls the industrial device. Therefore, for related descriptions and technical effects of the foregoing method, refer to the descriptions of the first aspect.

According to a fourth aspect, this application provides a parameter reading method. The method is applied to an industrial network, where the industrial network includes a control device and Y network terminals, each network terminal is configured to control at least one industrial device, the Y network terminals include a first network terminal, and Y is a positive integer. The method includes: The control device receives a second control frame from the first network terminal, where the second control frame carries N parameter values of N control objects of the at least one industrial device, locations of the N parameter values in the second control frame and information about the control objects corresponding to the N parameter values meet a third correspondence, and N is a positive integer. The control device reads the N parameters in the second control frame based on the third correspondence.

It should be noted that a process in which the first network terminal reads the parameter of the control object of the industrial device may be considered as an inverse process of a process in which the first network terminal controls the industrial device. Therefore, for related descriptions and technical effects of the foregoing method, refer to the descriptions of the second aspect of this application.

According to a fifth aspect, this application provides a network terminal, including a processor and a transceiver. The transceiver is configured to perform receiving and sending operations in any implementation of the first aspect or any implementation of the third aspect. The processor is configured to perform a processing operation in any implementation of the first aspect or any implementation of the third aspect.

According to a sixth aspect, this application provides a control device, including a processor and a transceiver. The transceiver is configured to perform receiving and sending operations in any implementation of the first aspect or any implementation of the third aspect. The processor is configured to perform a processing operation in any implementation of the first aspect or any implementation of the third aspect.

According to a seventh aspect, this application provides an industrial network, where the industrial network includes a control device and Y network terminals, each network terminal is configured to control at least one industrial device, the Y network terminals include a first network terminal, and Y is a positive integer. The control device is configured to construct a first control frame, where the first control frame carries N control commands, the N control commands are used to control N control objects of the at least one industrial device, locations of the N control commands in the first control frame and information about the N control objects meet a first correspondence, and N is a positive integer. The control device is configured to broadcast the first control frame to the Y network terminals, to enable at least one of the Y network terminals to control the N control objects based on the N control commands, the locations of the N control commands in the first control frame, and the first correspondence. The first network terminal is configured to receive the first control frame from the control device, where the first control frame carries the N control commands, the N control commands are used to control the N control objects of the at least one industrial device, the locations of the N control commands in the first control frame and the information about the N control objects meet the first correspondence, and N is a positive integer. The first network terminal is configured to determine, based on the locations of the N control commands in the first control frame and the first correspondence, the information about the control objects respectively corresponding to the N control commands. The first network terminal is configured to control the N control objects based on the N control commands and the information about the control objects respectively corresponding to the N control commands.

In an implementation, the control command includes a parameter value used to control the control object. The information about the control object includes a register address that is of the control object and that is in the industrial device. The first network terminal is configured to respectively write, based on register addresses of the control objects respectively corresponding to the N control commands, parameter values in the N control commands into registers of the control objects respectively corresponding to the N control commands, to enable the at least one industrial device to execute the N control commands.

In an implementation, the control command includes a parameter value used to control the control object. The information about the control object includes an identifier of the control object. The first network terminal is configured to determine, based on identifiers of the control objects respectively corresponding to the N control commands and a second correspondence, register addresses that are of the control objects respectively corresponding to the N control commands and that are in the at least one industrial device, where the second correspondence is a correspondence between the identifier of the control object and the register address that is of the control object and that is in the industrial device. The first network terminal is configured to respectively write, based on the register addresses of the control objects respectively corresponding to the N control commands, parameter values in the N control commands into registers of the control objects respectively corresponding to the N control commands, to enable the at least one industrial device to execute the N control commands.

For specific implementation, related descriptions, and technical effects of the control device and the network terminal, refer to the descriptions of the first aspect and the second aspect of this application.

According to an eighth aspect, this application provides an industrial network, where the industrial network includes a control device and Y network terminals, each network terminal is configured to control at least one industrial device, the Y network terminals include a first network terminal, and Y is a positive integer. The first network terminal is configured to obtain N parameter values of N control objects of the at least one industrial device, where N is a positive integer. The first network terminal is configured to construct, based on information about the control objects respectively corresponding to the N parameter values and a third correspondence, a second control frame carrying the N parameter values, where the third correspondence is a correspondence met between locations of the N parameter values in the second control frame and the information about the control objects corresponding to the N parameter values. The first network terminal is configured to send the second control frame to the control device, to enable the control device to read the N parameters in the second control frame based on the third correspondence. The control device is configured to receive the second control frame from the first network terminal, where the second control frame carries the N parameter values of the N control objects of the at least one industrial device, and the locations of the N parameter values in the second control frame and the information about the control objects corresponding to the N parameter values meet the third correspondence. The control device is configured to read the N parameters in the second control frame based on the third correspondence.

In an implementation, the information about the control object includes an identifier of the control object. The first network terminal is configured to: determine, based on register addresses that are of the control objects respectively corresponding to the N parameter values and that are in the industrial device and a fourth correspondence, identifiers of the control objects respectively corresponding to the N parameter values, where the fourth correspondence is a correspondence between the register address that is of the control object and that is in the industrial device and the identifier of the control object; and construct, based on the identifiers of the control objects respectively corresponding to the N parameter values and the third correspondence, the second control frame carrying the N parameter values.

For specific implementation, related descriptions, and technical effects of the control device and the network terminal, refer to the descriptions of the third aspect and the fourth aspect of this application.

According to a ninth aspect, this application provides a control frame, where the control frame carries N control commands, the N control commands are used to control N control objects of at least one industrial device, locations of the N control commands in the control frame and information about the N control objects meet a first correspondence, and N is a positive integer.

According to a tenth aspect, this application provides a control frame, where the control frame carries N parameter values of N control objects of at least one industrial device, locations of the N parameter values in the control frame and information about the control objects corresponding to the N parameter values meet a third correspondence, and N is a positive integer.

### BRIEF DESCRIPTION OF DRAWINGS

FIG. 1 is a schematic diagram of an architecture of an industrial network according to an embodiment of this application;
FIG. 2 is a schematic diagram of an embodiment a 1^{st} format of a control frame according to an embodiment of this application;
FIG. 3 is a schematic diagram of an embodiment of a 2^{nd} format of a control frame according to an embodiment of this application;
FIG. 4 is a schematic diagram of an embodiment of a 3^{rd} format of a control frame according to an embodiment of this application;
FIG. 5 is a schematic diagram of a first embodiment of a control frame according to an embodiment of this application;
FIG. 6 is a schematic diagram of a second embodiment of a control frame according to an embodiment of this application;
FIG. 7 is a schematic diagram of a third embodiment of a control frame according to an embodiment of this application;
FIG. 8 is a schematic diagram of a fourth embodiment of a control frame according to an embodiment of this application;
FIG. 9 is a schematic diagram of an embodiment of a control method according to this application;
FIG. 10 is a schematic diagram of an embodiment of a parameter reading method according to this application; and
FIG. 11 is a schematic diagram of a structure of a control frame processing apparatus according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by a person skilled in the art based on embodiments of this application without creative efforts shall fall within the protection scope of this application.

In the specification, claims, and accompanying drawings of this application, the terms "first", "second", corresponding term numbers, and the like are intended to distinguish between similar objects but do not necessarily indicate a specific order or sequence. It should be understood that the terms used in such a way are interchangeable in proper circumstances, and this is merely a discrimination manner that is used when objects having a same attribute are described in embodiments of this application. In addition, the terms "include", "have" and any other variants mean to cover the non-exclusive inclusion, so that a process, method, system, product, or device that includes a series of units is not necessarily limited to those units, but may include another unit not expressly listed or inherent to such a process, method, product, or device.

In descriptions of this application, "/" means "or" unless otherwise specified. For example, A/B may indicate A or B. In this application, "and/or" describes only an association relationship for describing associated objects and indicates that three relationships may exist. For example, A and/or B may indicate the following three cases: Only A exists, both A and B exist, and only B exists. In addition, in the descriptions of this application, " at least one item" means one or more items, and "a plurality of items" means two or more items. "At least one item (piece) of the following" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be in a singular form or a plural form.

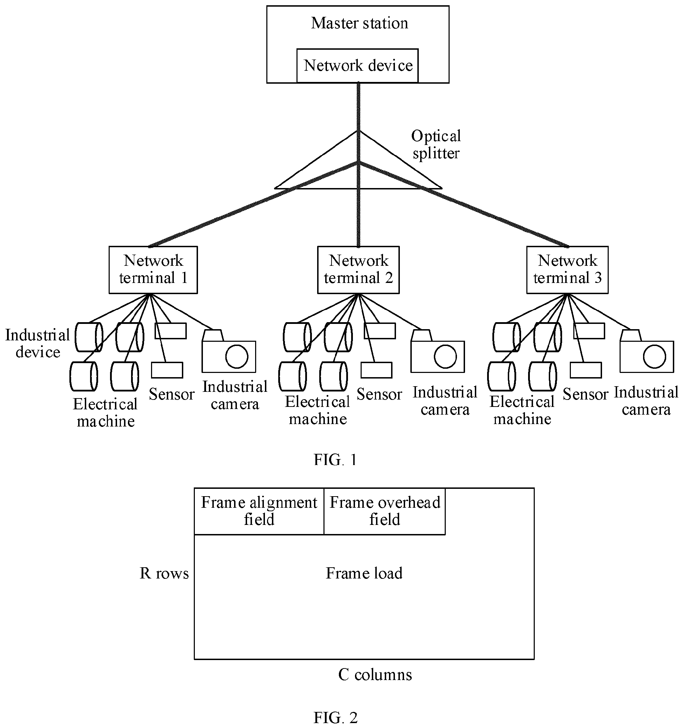

Embodiments of this application may be applied to an industrial optical network shown in FIG. 1. The industrial optical network includes a master station, an optical splitter, and a plurality of network terminals. The master station and the network terminal may communicate with each other via the optical splitter. A quantity of network terminals is not specifically limited in this embodiment of this application. For example, FIG. 1 shows three network terminals (namely, network terminals 1 to 3).

The master station may also be referred to as a control device, and is a device having a computing capability and a network processing capability. Specifically, the master station may be a personal computer (Personal Computer, PC) or a server. If the master station is the PC, the PC may be an engineering-dedicated PC or a general-purpose PC.

A network device is further installed in the master station. The network device may be an optical network interface card, and is configured to communicate with a network device by using an optical communication technology.

The optical splitter is configured to: split, in a downlink direction, an optical signal sent by the master station into a plurality of channels, and broadcast the plurality of channels to the plurality of network terminals. The optical splitter is further configured to: combine, in an uplink direction, optical signals sent by the plurality of network terminals, and send a combined signal to the master station.

The network terminal is configured to perform industrial control communication with the master station, for example, receive a control command sent by the master station, and control an industrial device based on the control command. The network terminal is further configured to feed back control information of the industrial device to the master station.

Each network terminal is configured to control at least one industrial device. Types and a quantity of industrial devices controlled by each network terminal are not specifically limited in this embodiment of this application. For example, as shown in FIG. 1, the industrial device controlled by each network terminal includes a plurality of electrical machines, a plurality of sensors, and an industrial camera.

The industrial device may be roughly classified into two types. One is an industrial device that needs to be controlled in a real-time manner (where generally, control precision lower than a millisecond-level is needed). In this application, this type of the industrial device is referred to as a real-time industrial device. The real-time industrial device may include an electrical machine, a real-time sensor, and the like. The other is an industrial device that does not need to be controlled in a real-time manner (where generally, control precision higher than the millisecond-level is needed). In this application, this type of the industrial device is referred to as a non-real-time industrial device. The non-real-time industrial device may include a camera.

In a conventional control method, the master station communicates with the network terminal by using an Ethernet packet. In addition to a control command, the Ethernet packet further includes content such as an identifier of a read/write command, an identifier of the network terminal configured to receive the control command and control the industrial device based on the control command, register address information of the industrial device, and a data length.

It can be learned that the Ethernet packet carries a large quantity of overhead fields, affecting a transmission speed of the control command. As a result, the real-time control on the industrial device cannot be implemented.

In embodiments of this application, carrying may also be understood as having or including.

To resolve a problem existing in the foregoing conventional control method, a control frame used to carry the control command is innovatively designed in this application. The control frame carries a small quantity of overhead fields, so that the transmission speed of the control command can be increased. This facilitates control on the industrial device, and in particular, facilitates the real-time control on the industrial device.

The following describes the control frame. First, it should be noted that the control on the industrial device (especially the real-time industrial device) is mainly that the master station performs a read/write operation on a specified register address in the industrial device by using the control command. In addition, the control command has the following features.

First, a length of the control command is small. Take the electrical machine as an example. Generally, in each control cycle, dozens of bits (such as 32 bits, 64 bits, and 96 bits) of data are separately read from and written into the specified register address.

Second, the register address is relatively definite. Take the electrical machine as an example. When the electrical machine enters a running state and runs normally, basically in each control cycle, the master station reads data from one or more fixed register addresses, and writes data of another or more fixed register addresses. In addition, the register address is determined in a design phase, and does not change dynamically during an electrical machine running process.

Because the register address is relatively definite, a quantity of control commands is relatively definite in a process in which the industrial device is controlled. In addition, because the length of the control command is small, a data length of the control frame is limited.

Based on the two points, in embodiments of this application, the data length of the control frame is set to a fixed value. That the data length of the control frame is the fixed value may be understood as that data lengths of all control frames sent by the master station are equal.

Because the data length of the control frame is set to the fixed value, the control frame does not need to carry a field used to mark the data length. In this way, overhead fields in the control frame are reduced, and the transmission speed of the control command is increased, to implement the real-time control on the industrial device.

The control frame provided in this application may include a frame alignment field. The frame alignment field is a fixed bit combination, and is used to locate a boundary (which may also be understood as a start location) of the control frame.

It may be understood that the control frame is transmitted in a form of a bit stream, and the control frame provided in embodiments of this application may be detected by using the frame alignment field. Specifically, when the frame alignment field included in the bit stream is identified, it may be considered as a start of the control frame.

After the frame alignment field is identified, the bit stream may be divided based on a preset format of the control frame, to obtain the control frame provided in embodiments of this application.

It should be noted that there are a plurality of formats of the control frame. This is not specifically limited in embodiments of this application. The following describes three formats of the control frame.

A 1^{st} format of the control frame is shown in FIG. 2. Specifically, the control frame is a bit matrix of R rows and C columns, and specifically includes a frame alignment field, a frame overhead field, and a frame load part. The frame overhead field indicates that the control frame is a common frame or a real-time frame. The real-time frame is a control frame used to transmit a control command of the real-time industrial device, and the common frame is a control frame used to transmit a control command of the non-real-time industrial device. In this embodiment of this application, the industrial device is mainly the real-time industrial device. Therefore, generally, the frame overhead field indicates that the control frame is the real-time frame. The frame payload part is used to transmit data, and the data may be the control command.

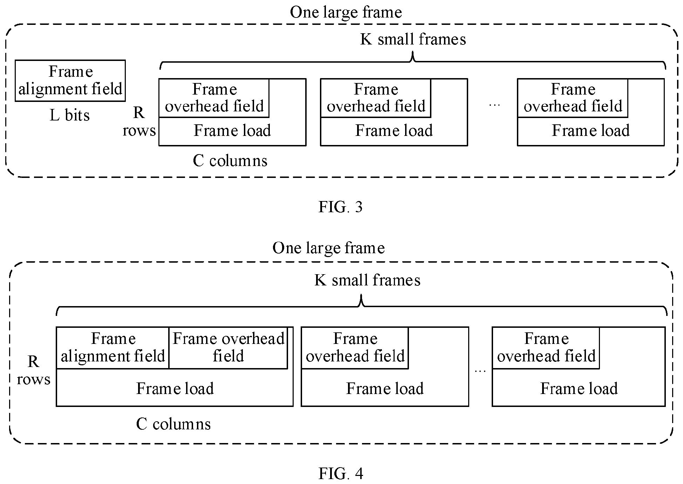

A 2^{nd} format of the control frame is shown in FIG. 3. Specifically, L bits and K small frames form one large frame, each small frame is the control frame provided in this embodiment of this application, and the L bits are frame alignment fields. Similar to the control frame shown in FIG. 2, the control frame shown in FIG. 3 is also a bit matrix of R rows and C columns, and includes a frame overhead field and a frame load part. A difference is that the control frame shown in FIG. 3 does not include a frame alignment field.

A 3^{rd} format of the control frame is shown in FIG. 4. Specifically, K small frames form one large frame, and each small frame is the control frame provided in this embodiment of this application. Similar to the control frame shown in FIG. 2, the control frame shown in FIG. 4 is also a bit matrix of R rows and C columns, and each control frame includes a frame overhead field and a frame load part. A difference is that in the large frame, only a 1^{st} small frame (that is, a 1^{st} control frame) includes a frame alignment field, and another small frame (that is, another control frame) does not include a frame alignment field.

The frame overhead field and the frame load part in FIG. 3 and FIG. 4 may be understood with reference to related descriptions of FIG. 2.

In the foregoing embodiments, the field used to mark the data length is omitted, to reduce the overhead fields carried in the control frame, and increase the transmission speed of the control command. In addition to that the field used to mark the data length is omitted, a field of register address information of the industrial device may be further omitted in the control frame provided in embodiments of this application. In addition, because the field of the register address information of the industrial device includes a large amount of content, omitting the field of the register address information of the industrial device has a clear effect on increasing the transmission speed of the control command.

It may be understood that a purpose of performing the read/write operation on the specified register address in the industrial device is to control a control object of the industrial device. Generally, different register addresses correspond to different control objects.

The control object may be a speed, a location, power, or the like of the industrial device.

Based on this, the control frame may carry a control command used to control the control object of the industrial device, and a location of the control command in the control frame corresponds to information about the control object.

In this way, after receiving the control frame, the network terminal may determine, based on the location of the control command in the control frame, the information about the control object controlled by the control command, and may further determine, based on the information about the control object, a register address corresponding to the control command.

Therefore, the field that is of the register address information of the industrial device and that is in the control frame may be omitted, to further reduce the overhead fields carried in the control frame, and increase the transmission speed of the control command.

It can be learned from the foregoing descriptions that the data length of the control frame is the fixed value, and the fixed value may be determined based on an actual requirement.

In an implementation, the data length of the control frame may be designed to be long enough, so that the control frame can carry all control commands used to control control objects of the industrial device served by the network device, and a location of each control command in the control frame corresponds to the information about the control object.

The industrial optical network shown in FIG. 1 is used as an example. The control frame carries control commands used to control control objects of all industrial devices in FIG. 1 (that is, industrial devices served by the three network terminals in FIG. 1).

Correspondingly, each network terminal may obtain, from the control frame, a control command used to control a control object of an industrial device corresponding to the network terminal.

In this embodiment, the control frame does not need to include an identifier of the network terminal.

It may be understood that, in some scenarios, only a control object of an industrial device served by one network terminal needs to be controlled. In this case, if the foregoing control frame is used, the control frame carries a large quantity of redundant control commands, reducing a transmission speed of the control frame.

Therefore, in an implementation, the data length of the control frame may be properly designed, so that the control frame carries only all control commands used to control control objects of an industrial device served by a target network terminal, and does not need to carry the control commands used to control the control objects of the industrial devices served by all network terminals. The target network terminal is any one of the plurality of network terminals.

For example, in some scenarios, only the control object of the industrial device served by the network terminal 1 needs to be controlled. Correspondingly, the control frame carries all commands used to control control objects of the industrial device served by the network terminal 1, and does not need to carry commands used to control control objects of industrial devices served by the network terminal 2 and the network terminal 3.

It should be noted that, in this embodiment of this application, the control frame is sent in a broadcast manner. Therefore, all network terminals receive each control frame sent by the master station.

However, because the control frame carries only all control commands used to control control objects of the industrial device served by the target network terminal, in order that the target network terminal can identify that the received control frame is used to control the control object of the industrial device corresponding to the target network terminal, the control frame may include an identifier of the target network terminal.

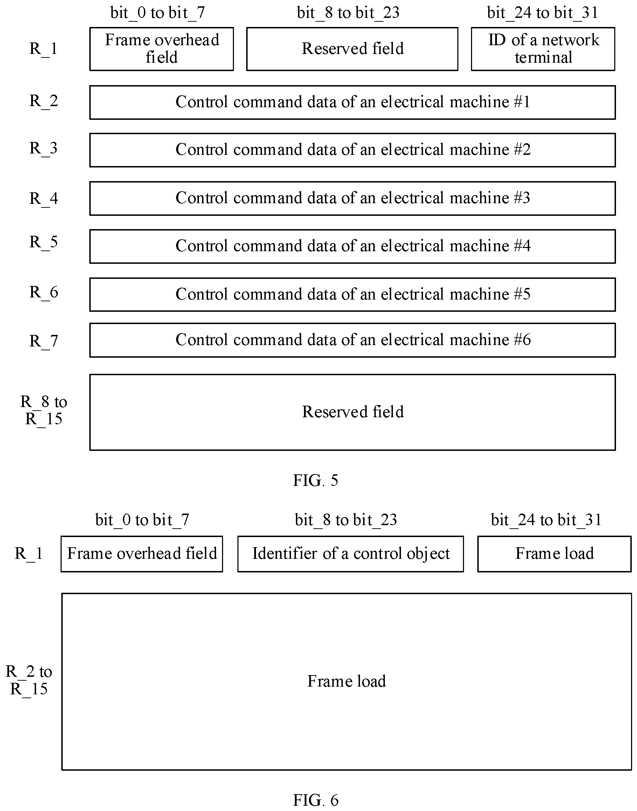

For example, a control frame shown in FIG. 5 includes an identifier of a network terminal, and the identifier ID of the network terminal occupies bit_24 to bit_31 in a 1^{st} row.

In the foregoing embodiment, the control frame carries all control commands used to control the control objects of the industrial device served by the target network terminal. However, in most scenarios, it is possible that only some control objects corresponding to the target network terminal need to be controlled, and not all control objects corresponding to the target network terminal need to be controlled.

In this case, if the control frame carries all control commands used to control the control objects of the industrial device served by the target network terminal, the control frame also carries a redundant control command, reducing the transmission speed of the control frame.

Therefore, in another implementation, the data length of the control frame may be properly designed, so that the control frame carries only some control commands used to control the control objects of the industrial device served by the target network terminal.

In addition, the control frame further includes an identifier of the control object, and the identifier of the control object is used to determine that control commands carried in the control frame are control commands used to control which control objects.

For example, in addition to a frame overhead field, a reserved field, and a frame payload part, a control frame shown in FIG. 6 further includes a field of an identifier of a control object. The field of the identifier of the control object is bit_8 to bit_23 in a 1^{st} row (indicated by R_1).

It can be learned based on related descriptions of embodiments in FIG. 5 and FIG. 6 that the control frame may carry N control commands, the N control commands are used to control N control objects of at least one industrial device, locations of the N control commands in the control frame and information about the N control objects meet a first correspondence, and N is a positive integer.

The information about the control object may include the identifier of the control object, or may include a register address that is of the control object and that is in the industrial device. It should be noted that the information about the control object may further include other information. This is not specifically limited in embodiments of this application.

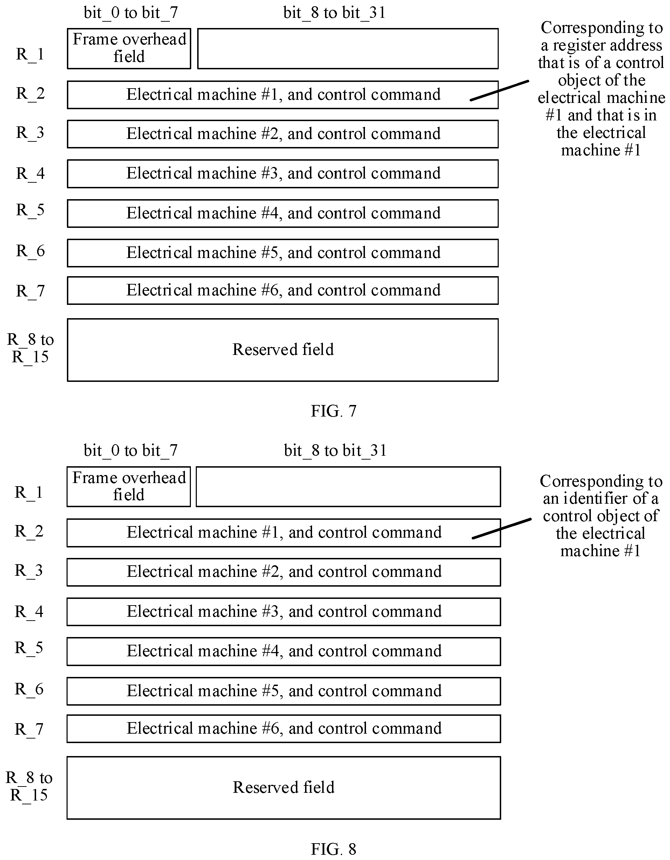

The following specifically describes a structure of the control frame with reference to FIG. 7 and FIG. 8.

FIG. 7 is a schematic diagram in which a location of a control command in a control frame and a register address that is of a control object and that is in an industrial device meet a first correspondence.

In the control frame shown in FIG. 7, a 1^{st} row (indicated by R_1) includes a frame overhead field and a reserved field, where the frame overhead field is bit_0 to bit_7, and the reserved field is bit_8 to bit_31. A 2^{nd} row (indicated by R_2), a 3^{rd} row (indicated by R_3), a 4^{th} row (indicated by R_4), a 5^{th} row (indicated by R_5), a 6^{th} row (indicated by R_6), and a 7^{th} row (indicated by R_7) respectively include: a control command used to control an electrical machine #1, a control command used to control an electrical machine #2, a control command used to control an electrical machine #3, a control command used to control an electrical machine #4, a control command used to control an electrical machine #5, and a control command used to control an electrical machine #6. An 8^{th} row to a 15^{th} row (indicated by R_8 to R_15) are also reserved fields.

The 2^{nd} row is used as an example. The control command used to control the electrical machine #1 corresponds to a register address that is of a control object of the electrical machine #1 and that is in the electrical machine # 1.

FIG. 8 is a schematic diagram in which a location of a control command in a control frame and an identifier of a control object meet a first correspondence.

In the control frame shown in FIG. 8, a 1^{st} row (indicated by R_1) includes a frame overhead field and a reserved field, where the frame overhead field is bit_0 to bit_7, and the reserved field is bit_8 to bit_31. A 2^{nd} row (indicated by R_2), a 3^{rd} row (indicated by R_3), a 4^{th} row (indicated by R_4), a 5^{th} row (indicated by R_5), a 6^{th} row (indicated by R_6), and a 7^{th} row (indicated by R_7) respectively include: a control command used to control an electrical machine #1, a control command used to control an electrical machine #2, a control command used to control an electrical machine #3, a control command used to control an electrical machine #4, a control command used to control an electrical machine #5, and a control command used to control an electrical machine #6. An 8^{th} row to a 15^{th} row (indicated by R_8 to R_15) are also reserved fields.

The 2^{nd} row is used as an example. The control command used to control the electrical machine #1 corresponds to an identifier of a control object of the electrical machine #1.

The following specifically describes a control method used to control an industrial device by using the foregoing control frame.

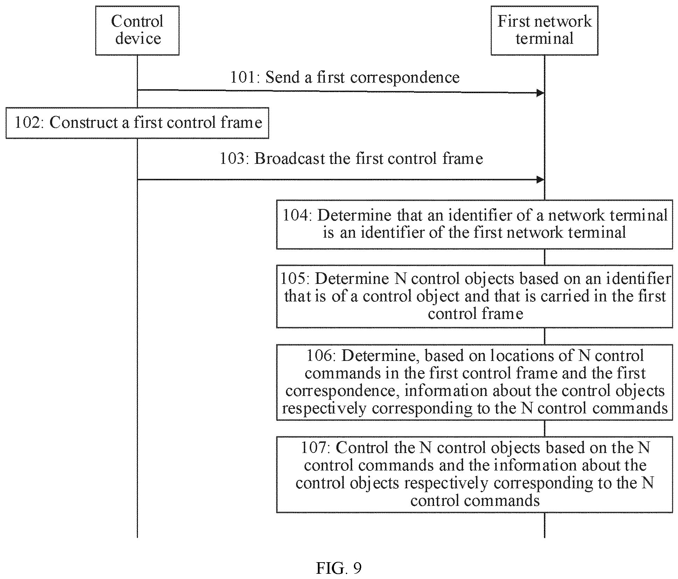

FIG. 9 shows an embodiment of a control method according to this application. The control method is applied to an industrial network, where the industrial network includes a control device and Y network terminals, each network terminal is configured to control at least one industrial device, the Y network terminals include a first network terminal, and Y is a positive integer. Because the industrial optical network (a type of the industrial network) is described above, the industrial network may be understood with reference to related descriptions of FIG. 1.

Based on the foregoing industrial network, this embodiment includes the following plurality of steps.

Step 101: The control device sends a first correspondence to the Y network terminals.

It can be learned from the foregoing descriptions that the first correspondence is a correspondence between a location of a control command in a first control frame and information about a control object.

It should be noted that the first correspondence may be a default rule of the control device and the network terminal, in other words, the control device does not need to send the first correspondence to the network terminal. Therefore, step 101 is optional.

Step 102: The control device constructs the first control frame.

The first control frame carries N control commands. The N control commands are used to control N control objects of the at least one industrial device, locations of the N control commands in the first control frame and information about the N control objects meet the first correspondence, and N is a positive integer.

The N control commands may be used to control N control objects of at least one industrial device served by the first network terminal.

It can be learned from the foregoing descriptions that, when the N control commands are used to control the N control objects of the at least one industrial device served by the first network terminal, the first control frame may further include an identifier of the control object, and the identifier of the control object is used to determine the N control objects.

Specifically, there are a plurality of identifiers of the control objects, and each identifier of the control object indicates some control objects in all control objects. The first control frame includes one of the plurality of identifiers of the control objects, and the identifier included in the first control frame indicates the N control objects. In this way, it may be determined, based on the identifier of the control object, that the control command carried in the control frame is a command used to control the N control objects.

The following describes the identifier of the control object by using a specific example.

For example, a network terminal is configured to control industrial devices A1 to A10 and industrial devices B1 to B10. The industrial devices A1 to A10 all include a register whose address is 0x0010, and the industrial devices B1 to B10 all include a register whose address is 0x0020.

In an implementation, a data length of the first control frame may be controlled, so that the control frame can carry only 20 control commands. The 20 control commands are respectively used to control 20 control objects of the industrial devices A1 to A10 and the industrial devices B1 to B10. In a process in which the 20 control objects of the industrial devices A1 to A10 and the industrial devices B1 to B10 are controlled, data is written into registers 0x0010 of the industrial devices A1 to A10 and registers Ox0020 of the industrial devices B1 to B10.

In another implementation, the data length of the first control frame may be controlled, so that the control frame can carry only 10 control commands and the identifier of the control object.

When the first control frame includes an identifier a of the control object, the 10 control commands are respectively used to control the 10 control objects of the industrial devices A1 to A10. In a process in which the 10 control objects of the industrial devices A1 to A10 are controlled, data is written into the registers 0x0010 of the industrial devices A1 to A10.

When the first control frame includes an identifier b of the control object, the 10 control commands are respectively used to control the 10 control objects of the industrial devices B1 to B10. In a process in which the 10 control objects of the industrial devices B1 to B10 are controlled, data is written into the registers Ox0020 of the industrial devices B1 to B10.

It may be understood that, in some scenarios (for example, in an odd-numbered cycle, for example, a 1^{st} cycle, a 3^{rd} cycle, a 5^{th} cycle, or the like), only the 10 control objects of the industrial devices A1 to A10 need to be controlled. In this case, if the first control frame carries 20 control commands, 10 of the control commands are redundant, and additional overheads are consumed. Similarly, in some other scenarios (for example, in an even-numbered cycle, for example, a 2^{nd} cycle, a 4^{th} cycle, a 6^{th} cycle, or the like), only the 10 control objects of the industrial devices B1 to B10 need to be controlled. In this case, if the first control frame carries 20 control commands, 10 of the control commands are also redundant, and additional overheads are also consumed.

However, in this embodiment, because the first control frame may further include the identifier of the control object, when only the 10 control objects of the industrial devices A1 to A10 need to be controlled, the first control frame only needs to include the 10 control commands used to control the 10 control objects of the industrial devices A1 to A10 and the identifier a of the control object. When only the 10 control objects of the industrial devices B1 to B10 need to be controlled, the first control frame only needs to include the 10 control commands used to control the 10 control objects of the industrial devices B1 to B10 and the identifier b of the control object.

It can be learned that, in this embodiment, a quantity of redundant control commands carried in the first control frame can be reduced, additional overheads of the first control frame can be reduced, and a transmission speed of the first control frame can be increased.

It can be learned from the foregoing descriptions that the first control frame may further include an identifier ID of the network terminal, and the identifier of the network terminal indicates one network terminal in the Y network terminals.

In this way, each network terminal may determine, based on the identifier that is of the network terminal and that is in the first control frame, whether the first control frame is used to control a control object of an industrial device corresponding to the network terminal, or is used to control a control object of an industrial device corresponding to another network terminal.

It can be learned from the foregoing descriptions that a purpose of performing a read/write operation on a specified register address in the industrial device is to control the control object of the industrial device. In this case, in an implementation, the control command includes a parameter value used to control the control object. In addition, the control command may further include other data. This is not specifically limited in this embodiment of this application.

When the control command includes the parameter value used to control the control object, the parameter value used to control the control object needs to be written into a corresponding register. In this case, it can be learned from the foregoing descriptions that the information about the control object may include a register address that is of the control object and that is in the industrial device, or may include the identifier of the control object.

In addition, in an implementation, the data length of the first control frame is the same as a data length of a second control frame, and an identifier that is of the network terminal and that is included in the second control frame is different from the identifier that is of the network terminal and that is included in the first control frame.

That the data length of the first control frame is the same as the data length of the second control frame may be specifically understood as that the data length of the first control frame is a fixed value. Therefore, the first control frame does not need to carry a field used to mark the data length. This reduces overhead fields in the first control frame, and increases a transmission speed of the control command.

Step 103: The control device broadcasts the first control frame to the Y network terminals, to enable at least one of the Y network terminals to control the N control objects based on the N control commands, the locations of the N control commands in the first control frame, and the first correspondence.

There are a plurality of manners of broadcasting the first control frame. This is not specifically limited in this embodiment of this application. For example, the first control frame may be broadcast via the optical splitter shown in FIG. 1.

Because the control device sends the first control frame in a broadcast manner, each network terminal receives the first control frame.

Correspondingly, the first network terminal receives the first control frame from the control device, where the first control frame carries the N control commands, the N control commands are used to control the N control objects of the at least one industrial device, the locations of the N control commands in the first control frame and the information about the N control objects meet the first correspondence, and N is a positive integer.

It should be noted that, to increase the transmission speed of the control command, especially when the control command carried in the first control frame is used to control a real-time industrial device, the first network terminal may broadcast the first control frame by using all bandwidth, in other words, broadcast the first control frame by using a continuous data stream, and the continuous data streams is used only to broadcast the first control frame.

Step 104: The first network terminal determines that the identifier of the network terminal is an identifier of the first network terminal.

It may be understood that, if it is determined that the identifier of the network terminal is the identifier of the first network terminal, it may indicate that the control command carried in the first control frame is used to control a control object of an industrial device corresponding to the first network terminal. Therefore, the first network terminal parses another field in the first control frame.

Because step 104 is performed when the first control frame further includes the identifier of the network terminal, step 104 is optional.

Step 105: The first network terminal determines the N control objects based on the identifier that is of the control object and that is included in the first control frame.

It can be learned from the foregoing descriptions that the N control objects may be some control objects of the industrial device served by the first network terminal. Therefore, the N control objects that meet the first correspondence with the locations of the N control commands in the first control frame are determined based on the identifier that is of the control object and that is included in the first control frame.

Because step 105 is performed when the first control frame further includes the identifier of the control object, step 105 is optional.

Step 106: The first network terminal determines, based on the locations of the N control commands in the first control frame and the first correspondence, the information about the control objects respectively corresponding to the N control commands.

It may be understood that the first control frame carries the N control commands, and the control commands are located at different locations in the first control frame. For each control command, the information about the control object corresponding to the control command may be determined based on the location of the control command and the first correspondence.

Step 107: The first network terminal controls the N control objects based on the N control commands and the information about the control objects respectively corresponding to the N control commands.

It can be learned from the foregoing descriptions that the information about the control object may include the register address that is of the control object and that is in the industrial device, or may include the identifier of the control object. The following describes step 107 in detail by using different information about the control object.

In an implementation, the control command includes the parameter value used to control the control object. The information about the control object includes the register address that is of the control object and that is in the industrial device.

Correspondingly, step 107 includes: The first network terminal respectively writes, based on register addresses of the control objects respectively corresponding to the N control commands, parameter values in the N control commands into registers of the control objects respectively corresponding to the N control commands, to enable the at least one industrial device to execute the N control commands.

It may be understood that, for each control command, the register address corresponding to the control command may be determined based on the location of the control command and the first correspondence, and then the control command is written into the register address.

In another implementation, the control command includes the parameter value used to control the control object. The information about the control object includes the identifier of the control object. Correspondingly, step 107 includes the following two steps. The first network terminal determines, based on identifiers of the control objects respectively corresponding to the N control commands and a second correspondence, register addresses that are of the control objects respectively corresponding to the N control commands and that are in the at least one industrial device, where the second correspondence is a correspondence between the identifier of the control object and the register address that is of the control object and that is in the industrial device.

The first network terminal respectively writes, based on the register addresses of the control objects respectively corresponding to the N control commands, parameter values in the N control commands into registers of the control objects respectively corresponding to the N control commands, to enable the at least one industrial device to execute the N control commands.

It may be understood that, for each control command, the identifier of the control object corresponding to the control command may be determined based on the location of the control command and the first correspondence. Because a network device needs to write the parameter value used to control the control object into a corresponding register, the network device may determine, based on the second correspondence between a local identifier of the control object and the register address that is of the control object and that is in the industrial device, the register address corresponding to each control command, and then write the control command into the register address.

In this embodiment of this application, because the locations that are of the N control commands carried in the first control frame and that are in the first control frame and the information about the N control objects meet the first correspondence, the network terminal may determine, based on the first correspondence, the information about the control object corresponding to each control command, and then control the control object based on the information about the control object. Therefore, the first control frame does not need to carry a field indicating the information about the control object corresponding to the control command. This reduces overhead fields carried in the control frame, and increases the transmission speed of the control command.

The foregoing describes a process in which the control device controls the industrial device served by the network terminal. In the foregoing process, the control device needs to deliver the control command to the network terminal by using the control frame. In some scenarios, the control device may alternatively read, from the register by using the control frame, the parameter of the industrial device served by the network terminal.

For example, when the industrial device is an electrical machine, the control device may need to read a current location of the electrical machine from the register. When the industrial device is a sensor, the control device may need to read a current temperature value of the sensor from the register

The control device may actively read the parameter of the industrial device from the register, in other words, the control device sends a command of reading the register to the network terminal. In response to the command, the network terminal reads the parameter of the industrial device from the register, and reports the parameter to the control device.

In addition, the network terminal may alternatively periodically read the parameter of the industrial device from the register, and periodically report the parameter to the control device.

The following first describes a control frame used in a parameter reading process.

This application provides the control frame. The control frame carries N parameter values of the N control objects of the at least one industrial device, locations of the N parameter values in the control frame and information about the control objects corresponding to the N parameter values meet a third correspondence, and N is a positive integer.

Based on the foregoing control frame, the following describes a method in which the control device reads the parameter.

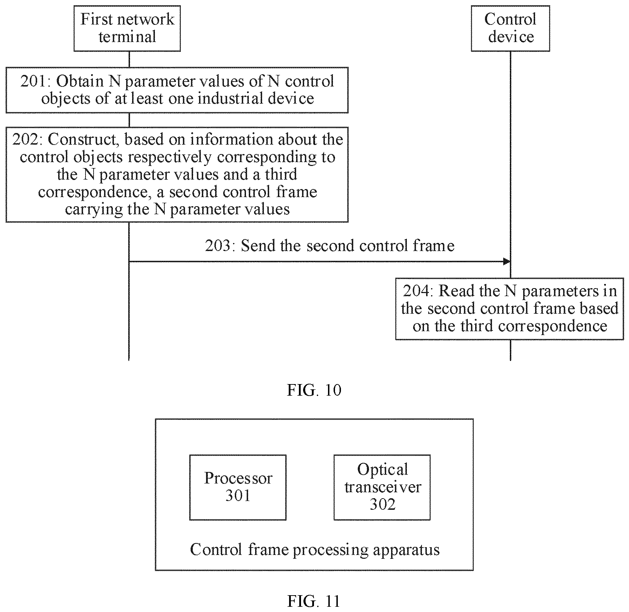

FIG. 10 shows a parameter reading method according to this application. The parameter reading method is applied to an industrial network. The industrial network includes a control device and Y network terminals, each network terminal is configured to control at least one industrial device, the Y network terminals include a first network terminal, and Y is a positive integer.

Because the industrial optical network (a type of the industrial network) is described above, the industrial network may be understood with reference to related descriptions of FIG. 1.

Based on the foregoing industrial network, this embodiment includes the following plurality of steps.

Step 201: The first network terminal obtains N parameter values of N control objects of the at least one industrial device, where N is a positive integer.

Step 202: The first network terminal constructs, based on information about the control objects respectively corresponding to the N parameter values and a third correspondence, a second control frame carrying the N parameter values, where the third correspondence is a correspondence met between locations of the N parameter values in the second control frame and the information about the control objects corresponding to the N parameter values.

In an implementation, the information about the control object includes a register address that is of the control object and that is in the industrial device.

In another implementation, the information about the control object includes an identifier of the control object.

Correspondingly, step 202 may include: The first network terminal determines, based on register addresses that are of the control objects respectively corresponding to the N parameter values and that are in the industrial device and a fourth correspondence, identifiers of the control objects respectively corresponding to the N parameter values, where the fourth correspondence is a correspondence between the register address that is of the control object and that is in the industrial device and the identifier of the control object. The first network terminal constructs, based on the identifiers of the control objects respectively corresponding to the N parameter values and the third correspondence, the second control frame carrying the N parameter values.

In another implementation, the second control frame further includes the identifier of the control object, and the identifier of the control object is used to determine the N control objects.

Step 203: The first network terminal sends the second control frame to the control device, to enable the control device to read the N parameters in the second control frame based on the third correspondence.

Correspondingly, the control device receives the second control frame from the first network terminal, where the second control frame carries the N parameter values of the N control objects of the at least one industrial device, the locations of the N parameter values in the second control frame and the information about the control objects corresponding to the N parameter values meet the third correspondence, and N is a positive integer.

After receiving the second control frame, if the second control frame further includes the identifier of the control object, the control device may first determine, based on the identifier of the control object, the N control objects corresponding to the N parameter values in the second control frame.

Step 204: The control device reads the N parameters in the second control frame based on the third correspondence.

Specifically, for any parameter in the second control frame, the information about the control object corresponding to the parameter may be determined based on the third correspondence, and then the register address that corresponds to the parameter and that is in the industrial device is determined based on the information about the control object.

For example, when the information about the control object includes the register address that is of the control object and that is in the industrial device, for any parameter in the second control frame, the register address that corresponds to the parameter and that is in the industrial device may be directly determined based on the third correspondence.

For another example, when the information about the control object includes the identifier of the control object, for any parameter in the second control frame, the identifier of the control object corresponding to the parameter may be determined based on the third correspondence. Then, the register address that corresponds to the parameter and that is in the industrial device is determined based on the fourth correspondence between the identifier of the control object and the register address in the industrial device.

It should be noted that the method in which the control device reads the parameter is similar to a method in which the control device sends a control command, and both are implemented by using a control frame. A difference lies in that, in the parameter reading method, the location of the parameter in the control frame and the information about the control object meet the third correspondence, and in a process in which the control command is sent, a location of the control command in the control frame and the information about the control object meet a first correspondence.

It can be learned that a process in which the control device reads the parameter may be considered as an inverse process of the process in which the control device sends the control command. Therefore, this embodiment shown in FIG. 10 may be understood with reference to related descriptions of embodiments shown in FIG. 1 to FIG. 9.

In this embodiment, the locations of the N parameter values in the second control frame and the information about the control objects corresponding to the N parameter values meet the third correspondence. In this way, after receiving the second control frame, the control device may read the N parameters in the second control frame based on the third correspondence. Therefore, the second control frame does not need to carry a field of register address information of the industrial device corresponding to the N parameter values. This reduces overhead fields carried in the second control frame, and increases a transmission speed of the parameter

In addition, it should be noted that, in the foregoing embodiment, when the control device needs to control an industrial device served by a network terminal, the control device may transmit the first control frame by using all bandwidth. However, in this embodiment, because a plurality of network terminals all need to report parameters, generally, bandwidth is allocated to the plurality of network terminals according to a specific rule, so that each network terminal can transmit the second control frame by using specific bandwidth. This may also be understood as follows: In this embodiment, the plurality of network terminals transmit the second control frame by using a time division multiplexing method.

FIG. 11 is a schematic diagram of a structure of a control frame processing apparatus according to an embodiment of this application. As shown in FIG. 11, this application provides an embodiment of a control frame processing apparatus.

The apparatus may be used in the foregoing network terminal, and specifically includes a processor 301 and an optical transceiver 302.

In a control process, the optical transceiver 302 is configured to perform an operation of receiving a first correspondence and a first control frame in the embodiment corresponding to FIG. 4.

The processor 301 is configured to perform step 104 to step 107 in FIG. 9.

For specific implementation, related descriptions, and technical effects of the processor 301 and the optical transceiver 302, refer to related descriptions of step 101 to step 107 in the method part.

The apparatus may be alternatively used in the foregoing control device, and specifically includes a processor 301 and an optical transceiver 302. In a control process, the optical transceiver 302 is configured to perform step 101 and step 103 in FIG. 9. The processor 301 is configured to perform step 102 in FIG. 9. For specific implementation, related descriptions, and technical effects of the processor 301 and the optical transceiver 302, refer to related descriptions of step 101 to step 103 in the method part.

When the foregoing apparatus is used in the foregoing network terminal, in a parameter reading process, the optical transceiver 302 is further configured to perform step 203 in FIG. 10.

The processor 301 is further configured to perform step 201 and step 202 in FIG. 10.

When the apparatus is used in the foregoing control device, in the control process, the optical transceiver 302 is further configured to perform an operation of receiving a second control frame in the embodiment corresponding to FIG. 4.

The processor 301 is further configured to perform step 204 in FIG. 10.

For the specific implementation, related descriptions, and technical effects of the processor 301 and the optical transceiver 302, refer to related descriptions of step 201 to step 204 in the method part.

This application provides an industrial network. The industrial network includes a control device and Y network terminals, each network terminal is configured to control at least one industrial device, the Y network terminals include a first network terminal, and Y is a positive integer. The control device is configured to construct a first control frame, where the first control frame carries N control commands, the N control commands are used to control N control objects of the at least one industrial device, locations of the N control commands in the first control frame and information about the N control objects meet a first correspondence, and N is a positive integer. The control device is configured to broadcast the first control frame to the Y network terminals, to enable at least one of the Y network terminals to control the N control objects based on the N control commands, the locations of the N control commands in the first control frame, and the first correspondence. The first network terminal is configured to receive the first control frame from the control device, where the first control frame carries the N control commands, the N control commands are used to control the N control objects of the at least one industrial device, the locations of the N control commands in the first control frame and the information about the N control objects meet the first correspondence, and N is a positive integer. The first network terminal is configured to determine, based on the locations of the N control commands in the first control frame and the first correspondence, the information about the control objects respectively corresponding to the N control commands. The first network terminal is configured to control the N control objects based on the N control commands and the information about the control objects respectively corresponding to the N control commands.

In an implementation, the control command includes a parameter value used to control the control object. The information about the control object includes a register address that is of the control object and that is in the industrial device. The first network terminal is configured to respectively write, based on register addresses of the control objects respectively corresponding to the N control commands, parameter values in the N control commands into registers of the control objects respectively corresponding to the N control commands, to enable the at least one industrial device to execute the N control commands.

In an implementation, the control command includes a parameter value used to control the control object. The information about the control object includes an identifier of the control object. The first network terminal is configured to determine, based on identifiers of the control objects respectively corresponding to the N control commands and a second correspondence, register addresses that are of the control objects respectively corresponding to the N control commands and that are in the at least one industrial device, where the second correspondence is a correspondence between the identifier of the control object and the register address that is of the control object and that is in the industrial device. The first network terminal is configured to respectively write, based on the register addresses of the control objects respectively corresponding to the N control commands, parameter values in the N control commands into registers of the control objects respectively corresponding to the N control commands, to enable the at least one industrial device to execute the N control commands.

For specific implementation, related descriptions, and technical effects of the control device and the network terminal, refer to the descriptions of the embodiment shown in FIG. 9.

This application provides an industrial network, where the industrial network includes a control device and Y network terminals, each network terminal is configured to control at least one industrial device, the Y network terminals include a first network terminal, and Y is a positive integer. The first network terminal is configured to obtain N parameter values of N control objects of the at least one industrial device, where N is a positive integer. The first network terminal is configured to construct, based on information about the control objects respectively corresponding to the N parameter values and a third correspondence, a second control frame carrying the N parameter values, where the third correspondence is a correspondence met between locations of the N parameter values in the second control frame and the information about the control objects corresponding to the N parameter values. The first network terminal is configured to send the second control frame to the control device, to enable the control device to read the N parameters in the second control frame based on the third correspondence. The control device is configured to receive the second control frame from the first network terminal, where the second control frame carries the N parameter values of the N control objects of the at least one industrial device, and the locations of the N parameter values in the second control frame and the information about the control objects corresponding to the N parameter values meet the third correspondence. The control device is configured to read the N parameters in the second control frame based on the third correspondence.

In an implementation, the information about the control object includes an identifier of the control object. The first network terminal is configured to: determine, based on register addresses that are of the control objects respectively corresponding to the N parameter values and that are in the industrial device and a fourth correspondence, identifiers of the control objects respectively corresponding to the N parameter values, where the fourth correspondence is a correspondence between the register address that is of the control object and that is in the industrial device and the identifier of the control object; and construct, based on the identifiers of the control objects respectively corresponding to the N parameter values and the third correspondence, the second control frame carrying the N parameter values.

For specific implementation, related descriptions, and technical effects of the control device and the network terminal, refer to the descriptions of the embodiment shown in FIG. 10 of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A control method, applied to an industrial network, wherein the industrial network comprises a control device and Y network terminals, each network terminal is configured to control at least one industrial device, the Y network terminals comprise a first network terminal, and Y is a positive integer; and
the method comprises:
receiving, by the first network terminal, a first control frame from the control device, wherein the first control frame carries N control commands, the N control commands are used to control N control objects of the at least one industrial device, locations of the N control commands in the first control frame and information about the N control objects meet a first correspondence, and N is a positive integer;
determining, by the first network terminal based on the locations of the N control commands in the first control frame and the first correspondence, the information about the control objects respectively corresponding to the N control commands; and
controlling, by the first network terminal, the N control objects based on the N control commands and the information about the control objects respectively corresponding to the N control commands.

2. The method according to claim 1, wherein the control command comprises a parameter value used to control the control object, and the information about the control object comprises a register address that is of the control object and that is in the industrial device; and
the controlling, by the first network terminal, the N control objects based on the N control commands and the information about the control objects respectively corresponding to the N control commands comprises:
respectively writing, by the first network terminal based on register addresses of the control objects respectively corresponding to the N control commands, parameter values in the N control commands into registers of the control objects respectively corresponding to the N control commands, to enable the at least one industrial device to execute the N control commands.

3. The method according to claim 1, wherein the control command comprises a parameter value used to control the control object, and the information about the control object comprises an identifier of the control object; and
the controlling, by the first network terminal, the N control objects based on the N control commands and the information about the control objects respectively corresponding to the N control commands comprises:
determining, by the first network terminal based on identifiers of the control objects respectively corresponding to the N control commands and a second correspondence, register addresses that are of the control objects respectively corresponding to the N control commands and that are in the at least one industrial device, wherein the second correspondence is a correspondence between the identifier of the control object and the register address that is of the control object and that is in the industrial device; and
respectively writing, by the first network terminal based on the register addresses of the control objects respectively corresponding to the N control commands, parameter values in the N control commands into registers of the control objects respectively corresponding to the N control commands, to enable the at least one industrial device to execute the N control commands.

4. The method according to any one of claims 1 to 3, wherein the first control frame further comprises the identifier of the control object; and
the N control objects are determined based on the identifier of the control object.

5. The method according to any one of claims 1 to 4, wherein the first control frame further comprises an identifier of the network terminal; and
before the determining, by the first network terminal based on the locations of the N control commands in the first control frame and the first correspondence, the information about the control objects respectively corresponding to the N control commands, the method further comprises:
determining, by the first network terminal, that the identifier of the network terminal is an identifier of the first network terminal.

6. A control method, applied to an industrial network, wherein the industrial network comprises a control device and Y network terminals, each network terminal is configured to control at least one industrial device, and Y is a positive integer; and
the method comprises:
constructing, by the control device, a first control frame, wherein the first control frame carries N control commands, the N control commands are used to control N control objects of the at least one industrial device, locations of the N control commands in the first control frame and information about the N control objects meet a first correspondence, and N is a positive integer; and
broadcasting, by the control device, the first control frame to the Y network terminals, to enable at least one of the Y network terminals to control the N control objects based on the N control commands, the locations of the N control commands in the first control frame, and the first correspondence.

7. The method according to claim 6, wherein the control command comprises a parameter value used to control the control object; and
the information about the control object comprises a register address that is of the control object and that is in the industrial device.

8. The method according to claim 6, wherein the control command comprises a parameter value used to control the control object; and
the information about the control object comprises an identifier of the control object.

9. The method according to any one of claims 6 to 8, wherein the first control frame further comprises the identifier of the control object, and the identifier of the control object is used to determine the N control objects.

10. The method according to any one of claims 6 to 9, wherein the first control frame further comprises an identifier of the network terminal, and the identifier of the network terminal indicates one of the Y network terminals.

11. The method according to claim 10, wherein a data length of the first control frame is the same as a data length of a second control frame, and an identifier that is of the network terminal and that is comprised in the second control frame is different from the identifier that is of the network terminal and that is comprised in the first control frame.

12. A parameter reading method, applied to an industrial network, wherein the industrial network comprises a control device and Y network terminals, each network terminal is configured to control at least one industrial device, the Y network terminals comprise a first network terminal, and Y is a positive integer; and
the method comprises:
obtaining, by the first network terminal, N parameter values of N control objects of the at least one industrial device, wherein N is a positive integer;
constructing, by the first network terminal based on information about the control objects respectively corresponding to the N parameter values and a third correspondence, a second control frame carrying the N parameter values, wherein the third correspondence is a correspondence met between locations of the N parameter values in the second control frame and the information about the control objects corresponding to the N parameter values; and
sending, by the first network terminal, the second control frame to the control device, to enable the control device to read the N parameters in the second control frame based on the third correspondence.

13. The method according to claim 12, wherein the information about the control object comprises a register address that is of the control object and that is in the industrial device.

14. The method according to claim 12, wherein the information about the control object comprises an identifier of the control object; and
the constructing, by the first network terminal based on information about the control objects respectively corresponding to the N parameter values and a third correspondence, a second control frame carrying the N parameter values comprises:
determining, by the first network terminal based on register addresses that are of the control objects respectively corresponding to the N parameter values and that are in the industrial device and a fourth correspondence, identifiers of the control objects respectively corresponding to the N parameter values, wherein the fourth correspondence is a correspondence between the register address that is of the control object and that is in the industrial device and the identifier of the control object; and
constructing, by the first network terminal based on the identifiers of the control objects respectively corresponding to the N parameter values and the third correspondence, the second control frame carrying the N parameter values.

15. The method according to any one of claims 12 to 14, wherein the second control frame further comprises the identifier of the control object, and the identifier of the control object is used to determine the N control objects.

16. A network terminal, comprising a processor and a transceiver, wherein
the transceiver is configured to perform receiving and sending operations in the method according to any one of claims 1 to 5 and claims 12 to 15; and
the processor is configured to perform a processing operation in the method according to any one of claims 1 to 5 and claims 12 to 15.

17. A control device, comprising a processor and a transceiver, wherein the transceiver is configured to perform receiving and sending operations in the method according to any one of claims 6 to 11, and the processor is configured to perform a processing operation in the method according to any one of claims 6 to 11.

18. An industrial network, wherein the industrial network comprises a control device and Y network terminals, each network terminal is configured to control at least one industrial device, the Y network terminals comprise a first network terminal, and Y is a positive integer;
the control device is configured to construct a first control frame, wherein the first control frame carries N control commands, the N control commands are used to control N control objects of the at least one industrial device, locations of the N control commands in the first control frame and information about the N control objects meet a first correspondence, and N is a positive integer;
the control device is configured to broadcast the first control frame to the Y network terminals, to enable at least one of the Y network terminals to control the N control objects based on the N control commands, the locations of the N control commands in the first control frame, and the first correspondence;
the first network terminal is configured to receive the first control frame from the control device, wherein the first control frame carries the N control commands, the N control commands are used to control the N control objects of the at least one industrial device, the locations of the N control commands in the first control frame and the information about the N control objects meet the first correspondence, and N is a positive integer;
the first network terminal is configured to determine, based on the locations of the N control commands in the first control frame and the first correspondence, the information about the control objects respectively corresponding to the N control commands; and
the first network terminal is configured to control the N control objects based on the N control commands and the information about the control objects respectively corresponding to the N control commands.
